**Europäisches Patentamt**

**European Patent Office**

**Office européen des brevets**

(19)

(11) Veröffentlichungsnummer : **0 521 182 B1**

(12) # EUROPÄISCHE PATENTSCHRIFT

(45) Veröffentlichungstag der Patentschrift :
03.02.93 Patentblatt 93/05

(51) Int. Cl.$^5$ : **G01F 1/66**, G01P 5/00

(21) Anmeldenummer : **91111161.5**

(22) Anmeldetag : **04.07.91**

(54) **Verfahren zur Messung der Strömungsgeschwingigkeit eines Fluids mit Ultraschall.**

(43) Veröffentlichungstag der Anmeldung :
**07.01.93 Patentblatt 93/01**

(45) Bekanntmachung des Hinweises auf die
Patenterteilung :
**03.02.93 Patentblatt 93/05**

(84) Benannte Vertragsstaaten :
**AT BE CH DE DK FR LI NL SE**

(56) Entgegenhaltungen :
**EP-A- 0 171 067**
**GB-A- 2 205 645**

(73) Patentinhaber : **SIEMENS**
**AKTIENGESELLSCHAFT**
**Wittelsbacherplatz 2**
**W-8000 München 2 (DE)**

(72) Erfinder : **Stark, Reihard, Dipl.-Ing. (FH)**
**Isoldenstrasse 6**
**W-8500 Nürnberg (DE)**
Erfinder : **Bialek, Dieter, Dipl.-Ing.(FH)**
**Aussigerstrasse 1**
**W-8411 Zeitlarn (DE)**

## Beschreibung

Die Erfindung betrifft ein Verfahren zur Messung der Strömungsgeschwindigkeit v eines Fluids mit Ultraschall nach dem Prinzip der Differenzfrequenz-Auswertung, wobei zunächst eine Regelung der Anzahl von Ultraschall-Wellenzügen über eine konstante Meßstrecke zur Angleichung an eine Soll-Anzahl und anschließend eine Phasenregelung erfolgt, aus der sich die beiden Werte für die Ultraschallfrequenzen in Richtung der Strömung $f_{LLLV}$ und hierzu entgegengesetzt $f_{LLLR}$ ergeben. Mit $Q \sim \Delta f_{LLL} = f_{LLLV} - f_{LLLR}$ erhält man den aktuellen Durchfluß.

Verfahren der obengenannten Art sind aus der DE 34 29 099 AI bekannt. Bedingt durch die relativ großen Frequenzänderungen bei großen Strömungsgeschwindigkeiten des Fluids, d.h. bei großen Durchflüssen bzw. durch Temperaturänderungen werden hohe Anforderungen an die Bandbreite der bei dem Verfahren eingesetzten Ultraschallwandler gestellt. Diese Anforderungen sind nicht immer zu erfüllen, so daß geeignete Wandler streng selektiert werden müssen, was zu geringer Ausbeute und damit zu hohen Kosten führt. Aufgrund der begrenzten Bandbreite der Ultraschallwandler kann sich bei der Regelung der Anzahl von Wellenzügen ein von der Soll-Anzahl n abweichender Wert ergeben. Geringe Abweichungen von der Soll-Anzahl im Bereich $n \pm 0.4 = n \cdot 360°$ $\pm 150$ lassen sich durch die anschließende Phasenregelung noch korrigieren. Hierzu stehen Phasenkomparatoren mit einem Fangbereich von $\pm 150°$ zur Verfügung. Bei größeren Abweichungen können sich jedoch fehlerhafte Durchflußmessungen ergeben.

Der Erfindung liegt daher die Aufgabe zugrunde, ein Verfahren der obengenannten Art zu schaffen, mit dem erwähnte Fehler bei Durchflußmessungen korrigiert werden. Die Aufgabe gabe wird dadurch gelöst, daß bei dem obengenannten Verfahren die Werte der Ultraschallfrequenzen $f_{LSLV}$, $f_{LSLR}$ ermittelt werden, die sich aus der Regelung der Anzahl von Wellenzügen aufgrund der Angleichung an die Soll-Anzahl n ergeben, daß sämtliche Frequenzwerte für $f_{LLLV}$, $f_{LLLR}$, $f_{LSLV}$ und $f_{LSLR}$ entsprechende Signale zur Auswertung einem Mikrocomputer zugeführt werden, der mit den Frequenzhüben $f_{LSLR} - f_{LSLV}$ und $\Delta f_{LLL} = f_{LLLR} - f_{LLLV}$ die entsprechenden Strömungsgeschwindigkeiten bzw. Durchflüsse $Q_{LSL}$, $Q_{LLL}'$ berechnet und der die beiden Durchflüsse $Q_{LSL}$ und $Q_{LLL}'$ miteinander vergleicht und den Durchfluß $Q_{LLL}'$ um den Durchflußwert korrigiert, der einem Phasensprung von 360°, d.h. einer Wellenlänge entspricht, sofern eine Abweichung zwischen dem Durchfluß $Q_{LLL}'$ und dem Durchfluß $Q_{LSL}$ errechnet wird, die größer ist als der einem halben Phasensprung von 180° entsprechende Durchfluß.

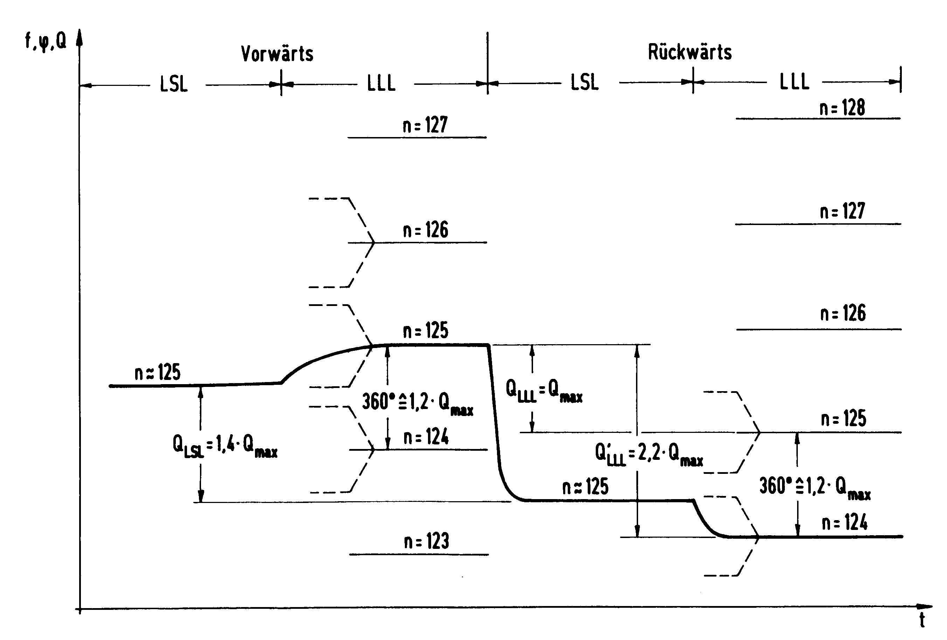

Im folgenden wird das Verfahren an einem Beispiel näher erläutert. In der Zeichnung ist hierzu ein Ablaufdiagramm für eine Ultraschalldurchflußmessung dargestellt, bei dem über der Zeitachse t die Frequenz f, die Phase $\varphi$ und der Durchfluß Q aufgetragen sind. Zwischen diesen Größen besteht eine Beziehung, die im vorliegenden Beispiel quantitativ wie folgt ausgedrückt werden kann:

$$360° = 1,2 \times Q_{max} = 12 \text{ kHz}.$$

Der Zusammenhang dieser Größen basiert auf einem Zahlenbeispiel, in dem die Schallgeschwindigkeit c = 1500 m/s die Strahllänge = 125 mm und die Ultraschallfrequenz f = 1,5 MHz betragen. Aus dem Verhältnis zwischen der Strahllänge 1 und der Schallgeschwindigkeit c ergibt sich die Laufzeit $t_L$ = 83,3 µs. Der Kehrwert der Laufzeit $t_L$ ergibt die Ultraschallfrequenz f = 12 kHz, bei der die Phasenverschiebung zwischen Sender und Empfänger des Ultraschallsignals eine Vollwelle, d.h. 360°, aufweist. Bei jeder weiteren Erhöhung der Frequenz um 12 kHz erhöht sich die Phasenverschiebung um 360°. Für die Phase $\varphi$ gilt folgende Beziehung

$$\varphi = -360° \cdot N = -360° \cdot \frac{1}{\lambda} = -360° \frac{1 \cdot f}{c \pm v}, \text{ wobei v}$$

die Strömungsgeschwindigkeit darstellt. Hieraus folgt für die Differenz der Phase $\varphi_V$ in Vorwärtsrichtung und der Phase $\varphi_R$ in Rückwärtsrichtung

$$\Delta \varphi = \varphi_V - \varphi_R = -360° \cdot 1 \cdot f \cdot \left(\frac{1}{c-v} - \frac{1}{c+v}\right) \approx -360° \cdot 1 \cdot f \cdot \frac{2v}{c^2}.$$

Bei einer maximalen Strömungsgeschwindigkeit $v_{max}$ = 5 m/s wird dann $\Delta\varphi$ = 300°. Hieraus ergibt sich

$$1,2 \cdot v_{max} \overset{\Delta}{=} 1,2 \cdot Q_{max} \overset{\Delta}{=} 360°.$$

Hierbei ist $Q = Q_{max}$ der aktuelle Durchfluß, der sich aufgrund der genauen Frequenzeinstellung in Vorwärts- und Rückwärtsrichtung, bezogen auf die Strömungsrichtung, ergibt, bei der die Soll-Anzahl von Wellenzügen n = 125 entlang der Meßstrecke erreicht ist. Gemäß dem Ablaufdiagramm beginnt die Durchflußmessung in Vorwärtsrichtung, wobei die Sendefrequenz $f_{LSLV}$ des sendenden Ultraschall-Wandlers so geregelt wird, daß sich etwa die Ordnungszahl n = 125 einstellt. Da noch keine Phasenregelung stattfindet, wird die Soll-Ordnungszahl nur ungefähr erreicht. In einem zweiten Schritt setzt die Phasenregelung ein, die im Idealfall eine Einregelung innerhalb des Bereichs von $\pm 180°$ ermöglicht. Im Diagramm ist der tatsächliche Fangbereich von Phasenkomparatoren innerhalb von $\pm 150°$ gestrichelt eingezeichnet. Im Beispiel wird durch die Phasenregelung die gewünschte Ordnungszahl n = 125 erreicht, der die Ultraschallfrequenz $f_{LLLV}$ entspricht. Die vorangehenden Schritte werden nun in Rückwärtsrichtung, d.h. entgegengesetzt zur Strömungsrichtung ausgeführt. Zunächst wird wiederum die Sendefrequenz $f_{LSLR}$ auf einen Wert eingestellt, der möglichst der Soll-Ordnungszahl n = 125 entsprechen soll. Durch Meßfehler aufgrund der begrenzten Bandbreite der Ultraschallwandler ergibt sich jedoch hier im Beispiel für die Frequenz $f_{LSLR}$ ein Wert, der gegenüber dem Frequenzwert für $f_{LSLV}$ einen Frequenzhub von 14 kHz aufweist, was einem Durchfluß $Q_{III}$ von 1,4 x $Q_{max}$ entspricht. Theoretisch müßte sich jedoch die Sendefrequenz $f_{LSLR}$ auf einen Wert einstellen, der dem Wert $f_{LLLV}$ abzüglich der $Q_{max}$ entsprechenden Frequenz von 10 kHz entspricht. Ohne die erfindungsgemäße Regelung stellt sich nun gemäß dem Diagramm aufgrund des Fangbereichs von ± 150° bei der Phasenregelung eine Ordnungszahl von 124 ein. Der Frequenzhub aus der Ultraschallfrequenz $f_{LLLR}$ gegenüber der Frequenz $f_{LLLV}$ ergibt einen Durchfluß von $Q_{LLL}' = 2,2 \, Q_{max}$. Gegenüber dem tatsächlichen Durchfluß von 1 x $Q_{max}$ entsteht somit ein Fehler von 1,2 x $Q_{max}$.

Bei der Phasenregelung kann die Sendefrequenz nur im 12 kHz-Raster, was einem Phasensprung von 360° entspricht, eingeregelt werden. Demzufolge können nur diskrete Fehler von z.B. + 1,2 x $Q_{max}$ (n = 124), O (n = 125) oder - 1,2 x $Q_{max}$ (n = 126) entstehen. Aus den gemessenen Frequenzwerten für $f_{LSLV}$ und $f_{LSLR}$ ergibt sich im Beispiel der Durchfluß $Q_{LSL}$ = 1,4 x $Q_{max}$. Entsprechend ergibt sich aus den Frequenzwerten für $f_{LLLV}$ und $f_{LLLR}$ der Durchfluß $Q_{LLL}' = 2,2 \, Q_{max}$. Zur Berechnung dieser Werte wird zweckmäßigerweise ein Mikrocomputer eingesetzt, dem die vorgenannten Frequenzwerte durch Zuführung entsprechender Signale eingegeben werden. Der Mikrocomputer kann durch Vergleich der Durchflüsse $Q_{LSL}$ und $Q_{LLL}'$ entscheiden, ob der ermittelte Durchfluß $Q_{LLL}'$ richtig ist oder ob eine Korrektur um ± 1,2 x $Q_{max}$ durchgeführt werden muß. Im vorliegenden Beispiel liegt $Q_{LLL}$ = $Q_{max}$ näher an $Q_{QLSL}$ = 1,4 x $Q_{max}$ und ergibt somit den richtigen Wert. Der Eindeutigkeitsbereich liegt bei

$$\frac{\pm 1,2 \times Q_{max}}{2} = \pm 0,6 \times Q_{max} \; (\; \hat{=} \; \pm 180°).$$

Bei einem Durchfluß Q = $Q_{max}$ darf somit der Fehler bei der Messung der Frequenz $f_{LSLR}$ bis ± 60 % betragen und trotzdem kann der dadurch bei der Messung der Frequenz $f_{LLLR}$ entstehende Fehler noch erkannt werden.

Der erkannte Fehler kann auf zwei verschiedene Arten korrigiert werden:

a) Der oben beschriebene, einem Phasensprung von 360° entsprechende Fehlbetrag, der einem Durchfluß von 1,2 x $Q_{max}$ entspricht, kann für eine bestimmte meßtechnische Anordnung relativ genau bestimmt werden. Stellt der Mikrocomputer eine Abweichung von mehr als 180 zwischen $Q_{LLL}'$ und $Q_{LSL}$ fest, so muß er nur entsprechend $Q_{LLL}'$ um den 360° entsprechenden Durchfluß nach oben oder unten rechnerisch korrigieren.

b) Die unter a) beschriebene rechnerische Korrektur mit dem Mikrocomputer kann mit geringem Hardware-Aufwand auch schaltungstechnisch realisiert werden. Sobal der Mikrocomputer die oben beschriebene Abweichung erkennt, lädt er z.B. über ein Ausgangsport die Spannung am Speicherkondensator des zur Frequenzregelung dienenden, steuerbaren Oszillator (siehe DE 34 29 099 Al) um einen - wieder etwa 360° entsprechenden - Betrag nach oben oder unten und führt eine weitere Phasenregelung zur Festlegung der Frequenz $f_{LLLR}$ durch. Durch die vorangegangene Korrektur ergibt sich dann die richtige Ordnungszahl und damit das richtige Ergebnis $Q_{LLL}$.

## Patentansprüche

1. Verfahren zur Messung der Strömungsgeschwindigkeit v eines Fluids mit Ultraschall nach dem Prinzip der DifferenzfrequenzAuswertung, wobei zunächst eine Regelung der Anzahl von Ultraschall-Wellenzügen über eine konstante Meßstrecke zur Angleichung an eine Soll-Anzahl und anschließend eine Phasenregelung erfolgt, aus der sich die beiden Werte für die Ultraschallfrequenzen in Richtung der Strömung $f_{LLLV}$ und hierzu entgegengesetzt $f_{LLLR}$ ergeben, **dadurch gekennzeichnet**, daß den Werten der Ultraschallfrequenzen $f_{LSLV}$, $f_{LSLR}$ entsprechende Signale gebildet werden, die sich aus der Regelung der Anzahl von Wellenzügen aufgrund der Angleichung an die Soll-Anzahl n ergeben, daß sämtlichen Frequenzwerten für $f_{LLLV}$, $f_{LLLR}$, $f_{LSLV}$ und $f_{LSLR}$ zur Auswertung einem Mikrocomputer zugeführt werden, der mit den Frequenzhuben $\Delta f_{LSL} = f_{LSLR} - f_{LSLV}$ und $\Delta f_{LLL} = f_{LLLR} - f_{LLLV}$ die entsprechenden Strömungsgeschwindigkeiten bzw. Durchflusse $Q_{LSL}$, $Q_{LLL}'$ berechnet und der die beiden Durchflüsse $Q_{LSL}$ und $Q_{LLL}'$ miteinander vergleicht und den Durchfluß $Q_{LLL}'$ um den Durchflußwert korrigiert, der einem Phasensprung von 360°, d.h. einer Wellenlänge entspricht, sofern eine Abweichung zwischen dem Durchfluß $Q_{LLL}'$ und dem Durchfluß $Q_{LSL}$ errechnet wird, die größer ist als der einem halben Phasensprung von 180° entsprechende Durchfluß.

## Claims

1. Method for measuring the flow velocity v of a fluid with ultrasound according to the principle of difference frequency evaluation, in which in the first instance regulation of the number of ultrasonic wave trains is effected over a constant measuring distance for adjustment to a desired number and subsequently a phase regulation is effected, from which result the two values for the ultrasonic frequencies in the direction of the flow $f_{LLLV}$ and, in opposition thereto, $f_{LLLR}$, characterised in that signals corresponding to the values of the ultrasonic frequencies $f_{LSLV}$, $f_{LSLR}$ are formed, which signals result from the regulation of the number of wave trains in view of the adjustment to the desired number n, in that all the frequency values for $f_{LLLV}$, $f_{LLLR}$, $f_{LSLV}$ and $f_{LSLR}$ are supplied for evaluation purposes to a microcomputer which with the frequency deviations $\Delta f_{LSL} = f_{LSLR} - f_{LSLV}$ and $\Delta f_{LLL} = f_{LLLR} - f_{LLLV}$ calculates the corresponding flow velocities or through-flows $Q_{LSL}$, $Q_{LLL}'$ and which compares the two through-flows $Q_{LSL}$ and $Q_{LLL}'$ with each other and corrects the through-flow $Q_{LLL}'$ by the through-flow value which corresponds to a phase jump of 360°, that is a wavelength, in so far as a deviation between the through-flow $Q_{LLL}'$ and the through-flow $Q_{LSL}$ is calculated which is greater than the through-flow corresponding to half a phase jump of 180°.

## Revendications

1. Procédé de mesure de la vitesse d'écoulement v d'un fluide à l'aide d'ultrasons, suivant le principe de l'exploitation de la fréquence différentielle, à effectuer d'abord un réglage du nombre des trains d'ondes ultrasonores sur une section de mesure constante pour l'égaler à un nombre de consigne et ensuite un réglage de phase à partir duquel on obtient les deux valeurs pour les fréquences ultrasonores dans le sens du courant $f_{LLLV}$ et dans le sens opposé $f_{LLLR}$, caractérisé en ce qu'il consiste à former des signaux qui correspondent aux valeurs des fréquences ultrasonores $f_{LSLV}$, $f_{LSLR}$, et qui résultent du réglage du nombre de trains d'ondes sur la base de l'égalisation au nombre de consigne n, à envoyer l'ensemble des valeurs de frequence pour $f_{LLLV}$, $f_{LLLR}$, $f_{LSLV}$ et $f_{LSLR}$, en vue de les exploiter, à un microordinateur qui, par les excursions de frequences $\Delta f_{LSL} = f_{LSLR} - f_{LSLV}$ et $\Delta f_{LLL} = f_{LLLR} - f_{LLLV}$, calcule les vitesses ou les débits de courants correspondants $Q_{LSL}$ et $Q_{LLL}'$ et qui compare les deux débits $Q_{LSL}$ et $Q_{LLL}'$ entre eux et corrige le débit $Q_{LLL}'$ de la valeur de débit correspondant à une variation brusque de phase de 360°, c'est-à-dire à une longueur d'onde, pour autant qu'a été calculé un écart entre le débit $Q_{LLL}'$ et le débit $Q_{LSL}$, qui est supérieur au débit correspondant à une demi-variation brusque de phase de 180°.

$f, \varphi, Q$

Vorwärts

Rückwärts

LSL — LLL — LSL — LLL — LSL

n = 125

$Q_{LSL} = 1,4 \cdot Q_{max}$

$360° \hat{=} 1,2 \cdot Q_{max}$

n = 123

n = 124

n = 125

n = 126

n = 127

$Q_{LLL} = Q_{max}$

$Q'_{LLL} = 2,2 \cdot Q_{max}$

$n \approx 125$

$360° \hat{=} 1,2 \cdot Q_{max}$

n = 124

n = 125

n = 126

n = 127

n = 128

t